(19) Europäisches Patentamt
European Patent Office
Office européen des brevets

(11) EP 2 642 759 B1

(12) **EUROPEAN PATENT SPECIFICATION**

(45) Date of publication and mention
of the grant of the patent:
**16.12.2015 Bulletin 2015/51**

(51) Int Cl.:
**H04N 13/02** $^{(2006.01)}$

(21) Application number: **13158678.6**

(22) Date of filing: **12.03.2013**

(54) **Multi-lens camera system**

Mehrlinsenkamerasystem

Système d'appareil photo multi-objectifs

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **21.03.2012 JP 2012063681
17.01.2013 JP 2013006359**

(43) Date of publication of application:
**25.09.2013 Bulletin 2013/39**

(73) Proprietor: **Ricoh Company, Ltd.
Tokyo 143-8555 (JP)**

(72) Inventor: **Yokota, Soichiro
Tokyo, 143-8555 (JP)**

(74) Representative: **Schwabe - Sandmair - Marx
Patentanwälte
Stuntzstraße 16
81677 München (DE)**

(56) References cited:
**WO-A1-2012/102941      US-A1- 2007 177 014
US-A1- 2008 199 069      US-B1- 6 373 523**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

BACKGROUND

Technical Field

The present invention relates to a multi-lens camera system capable of acquiring parallax information.

Related Art

Collision avoidance systems involving the use of in-vehicle stereo cameras have become widespread. A stereoscopic image of the area in front of the vehicle is generated using the stereo cameras, and an obstacle is detected and a distance to the obstacle is measured based on the generated stereoscopic image. The driver can then be alerted to take corrective action to avoid a collision or maintain a safe minimum distance between vehicles. Alternatively, the system can engage a control device such as the brakes and the steering.

Further, with improving sensor performance such as higher image resolutions, the focus of vehicle environment sensing has shifted from highway driving to city driving. In the city, the target sensing environment is much more diversified compared to the highway.

Accordingly, improving range-finding performance, such as higher spatial resolutions and higher range-finding accuracy, and adding color information in response to diversified conditions are required.

In city driving, since traffic is heavier and distances between vehicles are shorter compared to highway driving, the requirements for range-finding performance for controlling the brakes are stricter. In addition, it would be very useful if the taillights of another vehicle in front, the colors of the traffic lights, and lane lines and dividing lines (white lines or yellow lines) could be detected based on the color information to control the accelerator of the vehicle.

In the above-described situation, using a higher-resolution sensor in the camera is the most effective method for achieving higher spatial resolution and higher range-finding accuracy. However, parallax calculation using a higher image-resolution becomes complicated and needs a longer processing time.

In addition, in a color stereo camera like that proposed in JP-2005-346393-A that adds color information, color interpolation achieved by mounting color filters is needed, and accordingly, the accuracy of range-finding of a color stereo camera is not as good as that of a stereo camera whose filters are clear filters.

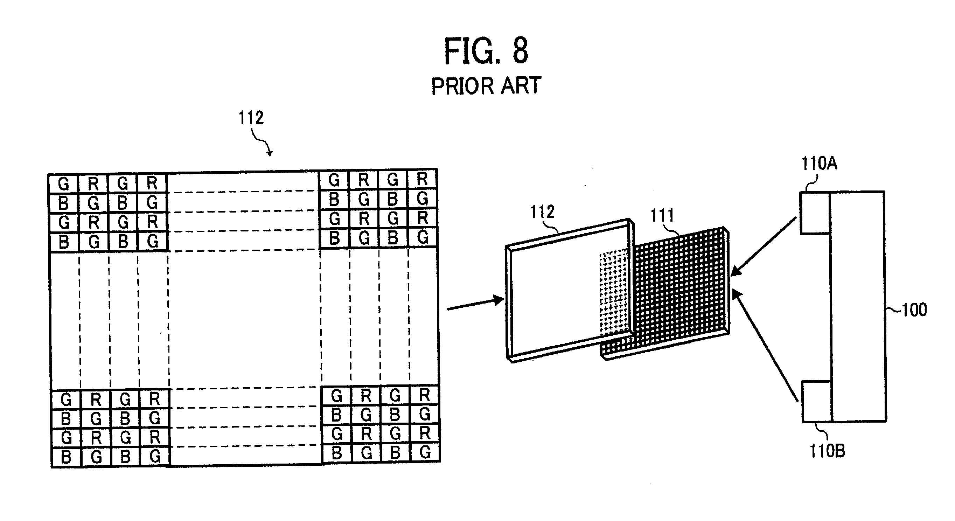

FIG. 8 is a diagram illustrating a configuration of a related-art color stereo camera 100. In the stereo camera 100, both camera units 110A and 110B include image sensors 111 and color filters 112. All of the color filters 112 in the respective camera units 110A and 110B have the same characteristics. As illustrated in FIG. 8, the color filter is divided into respective red, green, and blue (RGB) pixel areas. When the optical image enters via the camera units 110, only one-color component in the entered RGB color image passes through the respective RGB pixel areas, and the passed one-color component is detected by the image sensor 111.

In the stereo camera 100 like that shown in FIG. 8, for example, the parallax is calculated using any one of the following methods. As one example, each of the cameras 110A and 110B including the color filter 112 acquires the color image and executes color interpolation (synthesizes the respective color components) to form an interpolated color image, then calculates the parallax for the respective RGB image (pixels). Alternatively, the parallax may be calculated for the RGB image (pixels) in an original image whose color is not interpolated. Yet alternatively, as for the RGB image (pixel) in the original image whose color is not interpolated, the interpolated image is devised to decrease the number of images to be executed in the parallax calculation, and the parallax is calculated for the decreased RGB image (pixel) in the original image.

As a problem for any method in the parallax calculation in the color stereo camera, the number of images for which the parallax is calculated is increased. In particular, the method to execute the parallax calculation for the all interpolated image needs a great deal of time, and the processing time for the RGB images in the interposed color image takes an enormous amount of time.

In order to solve this problem, in the color interpolation calculation step, the color image is divided into luminance information (Y image) and color information (UV image), and then the parallax is calculated using only the luminance information.

However, in this example, the interpolated luminance image is used for the parallax calculation, and therefore, in particular, a width of variability in the range-finding is increased, which reduces the accuracy of range-finding. More specifically, when the color stereo camera is used, in order to realize the higher spatial resolution and the higher range-finding accuracy, a higher image-resolution sensor that is more accurate than the monochrome stereo camera is required. By contrast, when the sensor having similar resolution is used, adding the color information, the processing time needs to take additional longer time than that in the monochrome stereo camera, which has a conflicting problem (need the higher image-resolution + increase the processing time).

US 6,373,523 B1 discloses a charge-coupled device camera system including two CCDs which receive light from a common lens after it has passed an optical splitter. Each of the CCDs is operatively coupled to a different colour filter array for signal processing.

US 2008/0199069 A1 discloses a stereo camera for a motor vehicle which uses grey-scale image processing and colour image processing.

WO 2012/102941 A1 discloses a camera with multiple colour sensors which are operatively coupled to different colour filters.

US 2007/0177014 A1 discloses a monitoring unit for the exterior in the direction of travel of a motor vehicle including a camera system comprising a colour filter.

SUMMARY

It is a general object of the present invention to provide an improved and useful image forming apparatus in which the above-mentioned problems are eliminated. In order to achieve the above-mentioned object, there is provided a system as claimed in claim 1.

BRIEF DESCRIPTION OF THE DRAWINGS

A more complete appreciation of the disclosure and many of the attendant advantages thereof will be readily obtained as the same becomes better understood by reference to the following detailed description when considered in connection with the accompanying drawings, wherein:

FIG 1A is a schematic view illustrating a stereo camera in a stereo camera system according to a present disclosure;
FIG 1B is an expanded diagram illustrating image sensors and optical filters in a reference camera unit and a comparison camera unit shown in FIG 1A;
FIG. 2 is a block diagram illustrating a configuration of an image processor in the stereo camera system shown in FIG. 1A;
FIG. 3 is a fundamental view illustrating the stereo camera shown in FIG. 1A;
FIGS. 4A through 4D are diagrams illustrating various types of imaging patterns in the image sensor in the reference camera unit according to a first embodiment;
FIGS. 5A through 5C are diagrams illustrating configuration patterns of an optical filter according to a second embodiment;
FIG. 6 is a diagram illustrating a configuration of optical filters according to a third embodiment;
FIG. 7 is a schematic diagram illustrating a vehicle mounting the stereo camera system shown in FIG. 1A; and
FIG. 8 is a schematic view illustrating a related-art stereo camera in a stereo camera system.

DETAILED DESCRIPTION

In describing preferred embodiments illustrated in the drawings, specific terminology is employed for the sake of clarity. However, the disclosure of this patent specification is not intended to be limited to the specific terminology so selected, and it is to be understood that each specific element includes all technical equivalents that have the same function, operate in a similar manner, and achieve a similar result.

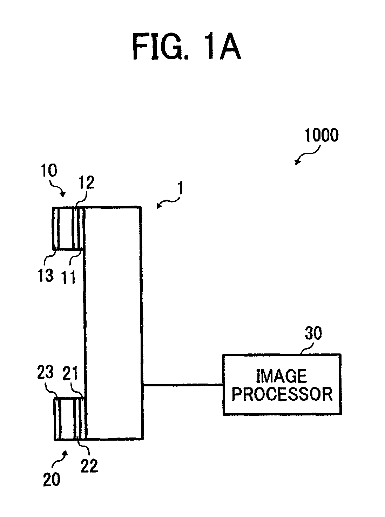

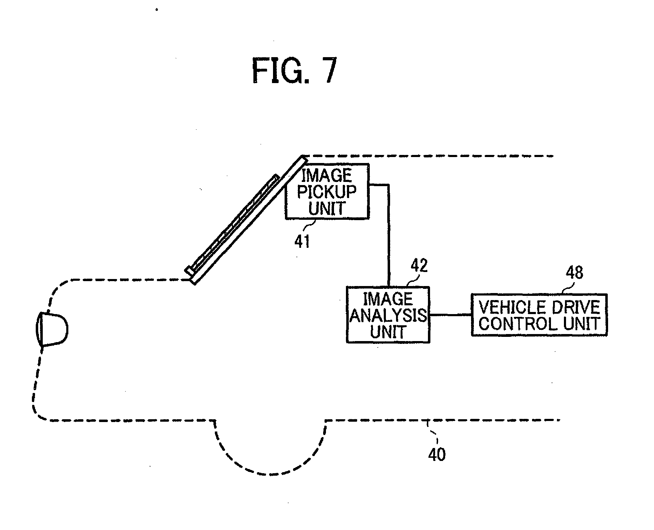

Referring now to the drawings, wherein like reference numerals designate identical or corresponding parts throughout the several views thereof, and particularly to FIGS. 1A through 7, a stereo camera system according to illustrative embodiments of the present disclosure is described.

(First Embodiment)

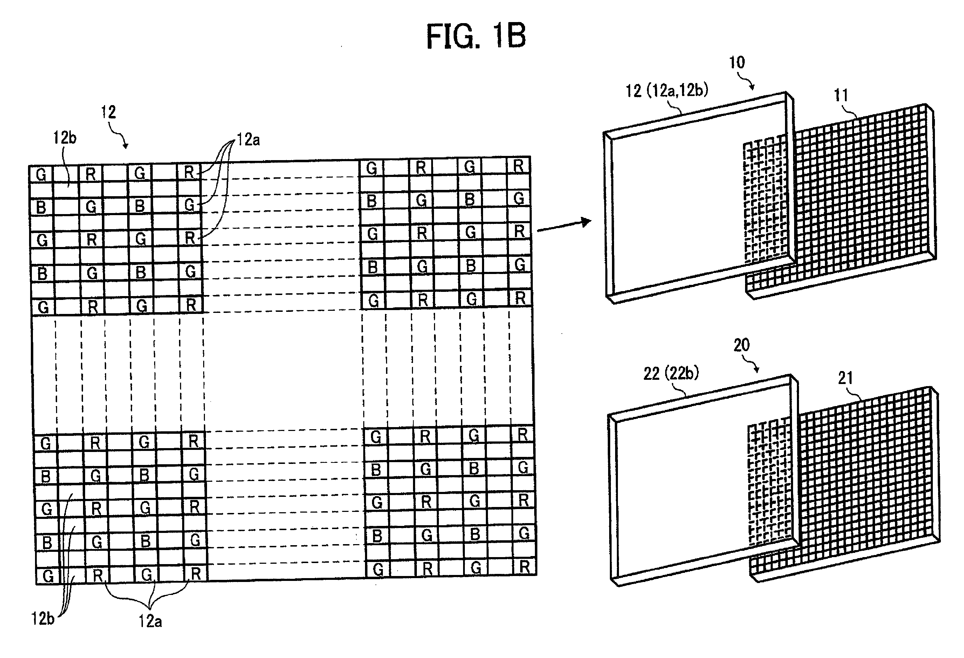

FIGS. 1A and 1B illustrate one example of a stereo camera device 1 in a stereo camera system (range-finding system) 1000 according to a present disclosure. In FIG. 1A, the range-finding system 1000 includes the stereo camera device 1 and an image processor 30 operatively connected to the stereo camera device 1. The stereo camera device 1 includes a reference camera unit 10 and a comparison camera unit 20, each disposed on opposite sides of the stereo camera device 1. The reference camera unit 10 includes an image sensor (image capturing element) 11, an optical filter 12 disposed upon the image sensor 11, and a lens 13 that concentrates light on the image sensor 11. Similarly, the comparison camera unit 20 includes an image sensor (image capturing element) 21, an optical filter 22 disposed upon the image sensor 21, and a lens 23 that concentrates the light on the image senor 21.

In the range-finding system 1000, the image processor 30 calculates the parallax calculation and recognizes image based on a captured image (sensor image) acquired by the camera units 10 and 20. The stereo camera system 1000 functions as a range-finding apparatus that captures the same object from different viewpoints, and measures a distance to the object and calculates a position of the object, using the fact that the focus on the sensor image changes depending on the distance to the object.

FIG. 1B is an expanded diagram illustrating the image sensors 11 and 21 and the optical filters 12 and 22 in the respective camera units 10 and 20. In FIG. 1B of the first embodiment, the optical filter 12 in the reference camera unit 10 has different optical characteristics from that of the optical filter 22 of the comparison camera unit 20. Accordingly, images (stereo images) captured by the image sensors 11 and 12 have different characteristics each other.

The optical filter 12 of the reference camera unit 10 is a special types of complex filter, and in the complex filter 12, multiple clear filter pixel areas (first filter parts) 12b are interposed among multiple RGB image areas (second filter pixel parts) 12a. With these configuration, the color information be detected using the multiple color image pixel parts 12a, and the luminance information can be detected using the multiple clear filter pixel parts 12b. The optical filter 22 of the comparison camera unit 20 is a clear simplex filter having multiple clear filter pixels 22b entirely.

Accordingly, the parallax can be simply calculated using the luminance information detected by the multiple clear filter pixel areas 12b of the complex filter 12 in the reference camera unit 10 and the luminance information acquired by the clear simplex filter 22(22b) of the comparison camera unit 20. In addition, since the image interpolated from the color image is not used by using only the luminance information, the parallax can be calculated with a high degree of accuracy. Further, process in the image processor 30 is divided into a first image processing on monochrome image area (first pixels) 10A-b passed thorough the multiple clear filter pixel areas 12b and a second image processing on color image areas (second pixels) 10A-a passed through the multiple color filter pixel areas 12a. Therefore, the entire image process can be sped up, enabling the use of higher image-resolution sensors. Accordingly, the stereo camera 1 can prevent the deterioration of the image-resolution.

It is to be noted that, all the clear filter 22 has to do is to acquire the luminance information, and therefore, a ND filter can be used as the filter 22 instead of the clear filter. Yet alternatively, the filter itself does not need the clear filter parts.

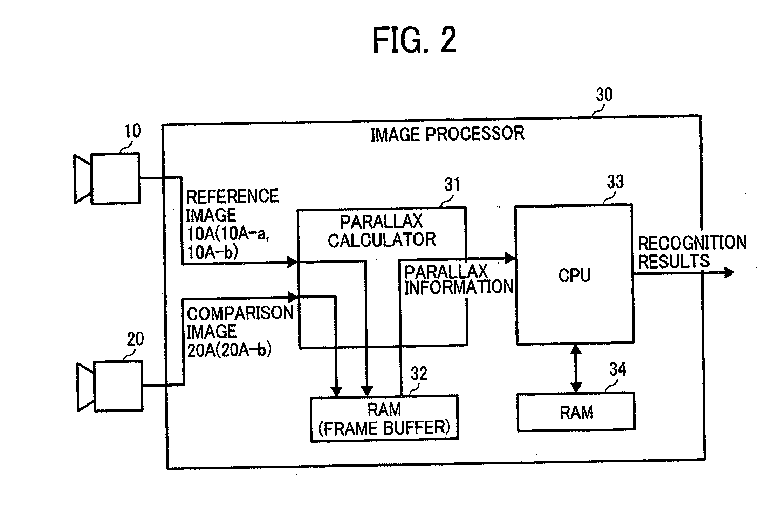

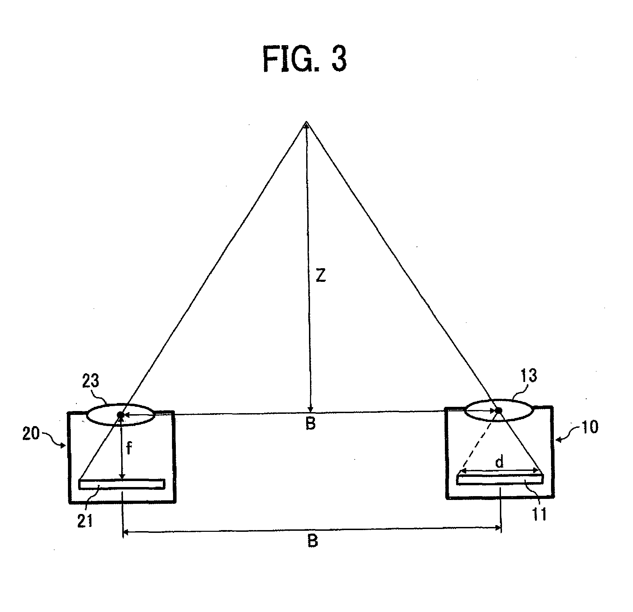

FIG. 2 is a diagram illustrating a configuration of the image processor 30 in the stereo camera system 1000. As illustrated in FIG. 3, the image processor 30 includes a parallax calculator 31, a random access memory (RAM) 32, a central processing unit (CPU) 33, and a RAM 34. The RAM 32 functions as a frame buffer to which a reference image 10A acquired by the reference camera unit 10 and a comparison image 20A acquired by the comparison camera unit 20 are input. The parallax calculator 31 is constituted by field programmable gate array (FPGA) or application specific integrated circuit ASIC. The CPU 33 executes recognition processing based on color pixel components (RGB pixel components) in the reference image 10A passed through the color filter region 12a. The RAM 34 stores temporarily data and process data processed by the CPU 33.

The process executed by the parallax calculator 31 can be executed by the CPU 33. However, considering the process speed, it is preferable that the parallax calculation process be executed by the hardware configuration.

FIG. 3 is a fundamental view illustrating the stereo camera device 1. The image processor 30 computes a distance to objects, using a baseline length (distance between the reference camera unit 10 and the comparison camera unit 20) B, a focal length f, a parallax (position difference in the focus points from viewpoints) d, and a distance Z to the object. The parallax (disparity) d is calculated based on following formula 1.

$$Z = \frac{B \times f}{d} \, ...(1)$$

In the formula 1, a reference numeral d represents a corresponding position difference between the reference image 10A acquired by the reference camera unit 10 and the comparison image 20A acquired by the comparison camera unit 20. The position d is generally calculated by block-matching using vicinity pixels around a target pixel. For example, assuming that the block size of frame containing the vicinity pixels are set at 9 x 9 block, the parallax d is calculated based on sum of absolute difference (SAD) like that represented as a following formula 2.

$$R_{SAD} = \sum_{j=1}^{9} \sum_{i=1}^{9} \left| I(i,j) - C(i,j) \right| \qquad ...(2)$$

As for a block matching method, other than SAD, various methods, such as, Sum of Squared Differences (SSD), Normalized Cross Correlation (NCC), and Zero-mean Sum of Absolute Differences (ASAD) are proposed, and any method can be used for this disclosure. Using this block-matching parallax calculation method of the formula 2, pixels in the comparison image (or decimal interpolated sub-pixel composite image) are calculated one by one for a target pixel in the reference image, and the most correlated position is computed as the parallax "d".

As described above, to search the parallax about a certain pixel, a process for the pixels corresponding to at least equal to or over the assumed parallax d is needed; and therefore, a great deal of time is required. For example, assuming that a search length where the parallax d is searched while the pixel is shifted per one pixel is 64 pixels, the processing time to execute parallax calculation to a certain image takes 64 times cycles, if a time period in which the parallax d is searched for 1 pixel is set at 1 clock cycle. In general, a setting that a time period in which correlation value is searched for 1 pixel is at 1 clock cycle is impossible, and the processing time is exponentially increased based on the block size used for calculating correlation value.

Therefore, reducing the parallax calculation time is major issue. The parallax calculation is represented as a general forms, representing as following formula 3.

$$T = N \times (t \times w) \quad ....(3)$$

In the formula 3, T represents a parallax calculation time for one image, N represents number of pixels of parallax calculation, t represents related calculation time per pixel, and w represents the search width. With these calculations, it is preferable that the optical information is concentrated on the image sensors 11 and 21 be used for the parallax (disparity) d as it is.

By contrast, in the general color stereo camera, respective color (RGB) filters are mounted on the image sensors. With this configuration, the interpolation is calculated to generate primary color images based on the optical information concentrated through the color filters, the parallax is calculated for the respective primary color images, and a final determination is made regarding the distance based on the calculated parallax.

Along these calculations, improving reliability of the parallax, that is, reducing mismatch becomes possible. However, the concentrated information is not directly used; thereby reducing the accuracy of the range-finding, and simultaneously, the time required for image processing takes immense amounts of time.

In the stereo camera device 1 shown in FIGS. 1A, and 1B, the complex filter 12 is mounted in the reference camera unit 10, and the clear filter 22 that captures the monochrome image is mounted in the comparison camera unit 20. Accordingly, the color image is captured only by the reference camera unit 10. Accordingly, when the stereo camera device 1 is used, the color image used for the image recognition is provided only on the reference camera unit 10 side.

In addition, in the reference camera unit 10, since the multiple clear filter pixel areas 12b are present, the resolution of the multiple color filter pixel areas 12a is naturally decreased. However, for example, when the real time image recognition is performed in the vehicle, the resolution of the color image is not so much necessary. This is because, since the color change of the captured environment seriously affects the interpolation processing, color images of long-range small target is unreliable, and the processing time for the color image lengthens. Using these characteristics, the clear filter parts 12b are interposed among the color filter parts 12a. With these configurations, calculating the parallax using the direct luminance information becomes possible.

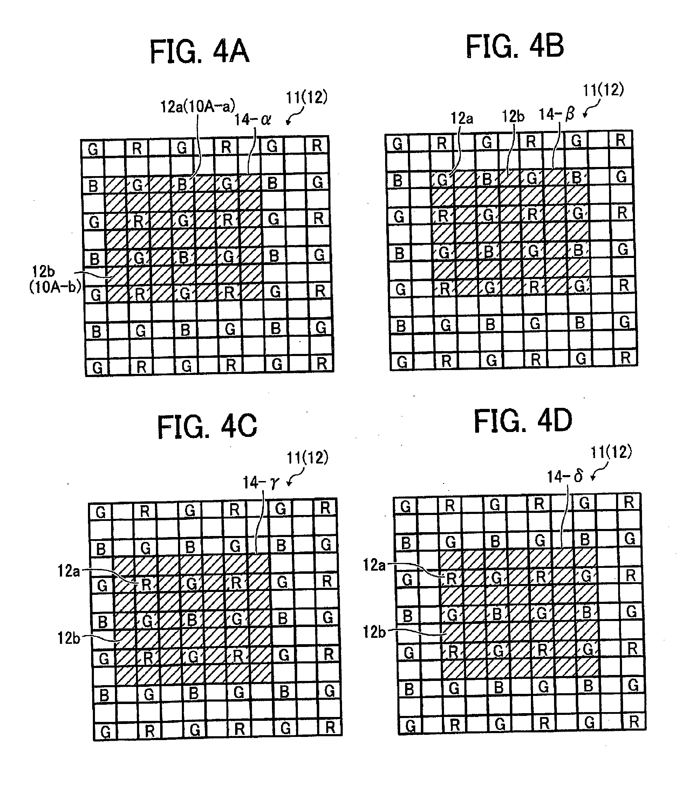

FIG. 4A through 4D are diagrams illustrating various types of imaging patterns in the image sensor 11 in the reference camera unit 10. As illustrated in FIGS. 4A through 4D, pixel positions of the luminance information used for the parallax calculation are dynamically changed respectively depending on the position of color objects in front of the stereo camera, and image location of the color objects in the image sensor 11. In the configuration of the captured image, the multiple clear filter pixels 12b are arranged in lines and the lines of the multiple clear filter pixels 12b are arranged among the multiple isolated color filter pixels 12a so that lines of the multiple first pixels 10A-b and the multiple isolated second pixels 10A-a alternate in a vertical direction and a horizontal direction in the complex image 10A.. FIG. 4A illustrates an imaging pattern 1. In the image pattern 1, an imaging frame 14-$\alpha$, whose block size is 7 times 7, has 12 pixels of the RGB pixels and 37 pixels of the luminance information. FIG. 4B illustrates an imaging pattern 2. In the image pattern 2, an imaging area 14-$\beta$, whose block size is 7 times 7, has 16 pixels of the RGB pixels and 33 pixels of the luminance information. FIG. 4C illustrates an imaging pattern 3. In the image pattern 3, an imaging frame 14-$\gamma$, whose block size is 7 times 7, has 9 pixels of the RGB pixels and 40 pixels of the luminance information. FIG. 4D illustrates an imaging pattern 4. In the image pattern 4, an imaging frame 14-$\delta$, whose block size is 7 times 7, has 12 pixels of the RGB pixels and 37 pixels of the luminance information.

In a related-art stereo camera like that shown in FIG. 8, this block-matching is performed per pixel directly for the monochrome images, and per pixel for the primary image for the four-color images.

Conversely, in the present embodiment, for example, when the reference optical filter 12 is constituted by the complex filter as shown in FIG. 1B and block size is 7x 7 matrix, four types of the block patterns like that shown in FIGS. 4A through 4D are present. As described above, the parallax is calculated while the used calculated pixel position is changed in the block-matching. At this time, the frame in the comparison image 20A shifts relative to the attention pixels (target pixels) of the reference image 10A, and comparison calculation around the attention pixel in frames is executed for the shifted frame.

For example, if the configuration of the color filter area is contained in the comparison camera 20 side, the composition of the block matching is entirely differ depending on the position of the pixel search, and calculating the parallax becomes impossible.

By contrast, in the present embodiment, by mounting the clear filter 22 in the comparison camera unit 20, the clear area is present in the entire the space of the comparison image 20A, and the pixels in the entire block configuration on the reference side can be used for the parallax calculation. That is, in a configuration of the optical filters 12 and 22 shown in FIG. 1B, four types of block matching methods (calculation pixel position selection methods in the block using the block matching methods) may be used. At this time, if the number of pixels used for the block-matching is changed, the units of the calculated value also are changed and the units differ among the pixels of same parallax search area width.

In order to solve this problem, it is conceivable that when the block matching is executed, the calculation result is stabilized by dividing the calculation result by the number of pixels. Alternatively, minimum number of the pattern that has possible to always generate the number of the calculation pixel (number: 33 shown in FIGS. 4A through 4D) is determined in advance, and the pixel position greater than the determined number is not calculated.

In general, the parallax calculation is more likely to be formed by a hardware configuration. Performing stabilizing process for the pixel number using the divider tends to be delayed. Accordingly, determining the number of calculation pixels has better result in that the resource of the hardware is effectively used and it becomes easy to perform concurrency control.

In addition, with these described constituted the filter configuration like that shown in FIG 1B, because of a precondition to execute the process without the color interpolate, precise filter mount technique is required. Herein, as for the respective cameras, a calibration process to measure the deviation of the filters, calculate luminance information ratio of the respective pixels, and abstract the information only for the luminance pixels by multiplying the coefficient thereof, may be provided. It is to be noted that, when the stereo camera system 1000 according to the present embodiment shown in FIG. 1B is implemented, the resolution of the color image is often deteriorated. As is clear from FIGS. 4A through 4D, the dimension of the multiple color filter pixel areas 12a is small because of the presence of the multiple clear filter pixel areas 12b.

However, in the real time image recognition technique, setting high-resolution of the color image is less likely to be required; and therefore, the low resolution in the color image is not a problem. Herein, if the high resolution of the color image is required, this case can be dealt by setting the higher resolution of the image sensors.

At present, in the real time image recognition apparatus mounted in-vehicle, the high-resolution camera, such as a digital camera and a mobile phone, cannot proceed to measure the distance in moving. Conversely, with the above-constituted stereo camera system shown in FIG. 1B, the high-resolution sensor can be effectively leveraged.

(Second embodiment)

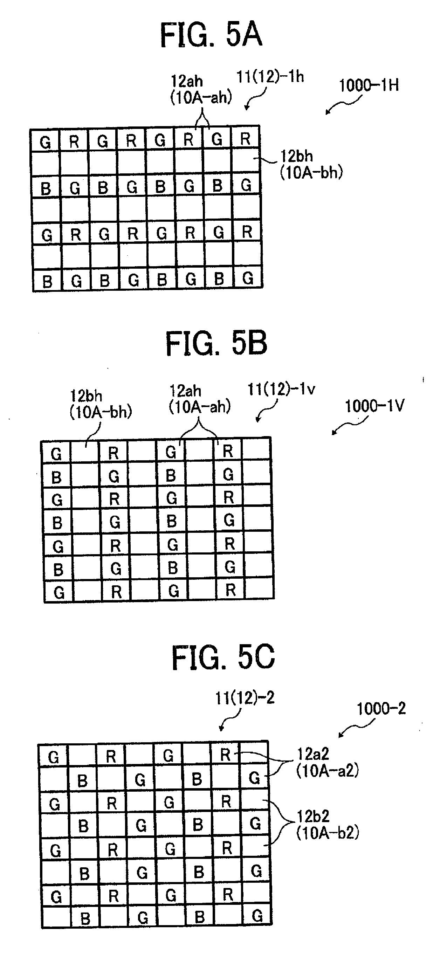

FIGS. 5A through 5C are diagrams illustrating configuration patterns of an optical filter 12-1 in stereo camera systems 1000-1H, 1000-1V, and 1000-2 according to a second embodiment. When the higher resolution of the color image is required, in addition to be higher resolution of the luminance image of the image sensor, as shown in FIGS. 5A through 5C, the ratio of the color information (multiple color filter pixel area) 12-1a is increased in the complex filter 12-1 and 12-2. In the above-described first embodiment shown in FIG. 1B, the multiple color filter pixel areas 12a are provided at a ratio of one to four pixels (1:4) in the complex filter 12.

By contrast, in a configuration pattern 1 shown in FIG. 5A, the parallax resolution in a horizontal direction is placed a special emphasis (1:1), and the parallax resolution is set half (1:2); that is, the multiple color filter pixel areas 12-ah are assigned at ratio of two in four pixels in a horizontal direction. In a configuration pattern 2 shown in FIG. 5B, the parallax resolution in a vertical direction is placed a special emphasis (1:1). That is, the patterns 1 and 2 shown in FIGS. 5A and 5B, the clear filter pixels 12bh and 12bv (image pixels 10A-bh and 10A-bv) and the image filter pixels 12ah and 12av (image pixels 10A-ah and 10A-av) are arranged in alternating bands.

In configuration pattern 3 shown in FIG. 5C, the parallax resolution is assigned evenly in the horizontal direction and the vertical direction. That is, the clear filter pixels 12b2 (image pixel 10A-b2) and the color filter pixels 12a2 (image pixel 10A-a2) are arranged in a check-board pattern.

When the filter is constituted as the patterns 1 or 2, the color ratio calculation in the color image is not square base, and the calculation is adjusted to match the pattern shape. With these filter configurations, it is required to adjust and design the ratio of the color area of the multiple color pixels 10A-ah, 10A-av, and 10A-a2 and the clear area of the multiple clear pixels (parallax calculation area) 10A-bh, 10A-bv, and 10A-b2 to suit the application.

In any cases shown in FIGS. 5A through 5C, by constituting the optical filter 22 of the comparison camera 20 by the clear filter, the parallax calculation can be performed with a high degree of accuracy.

(Third embodiment)

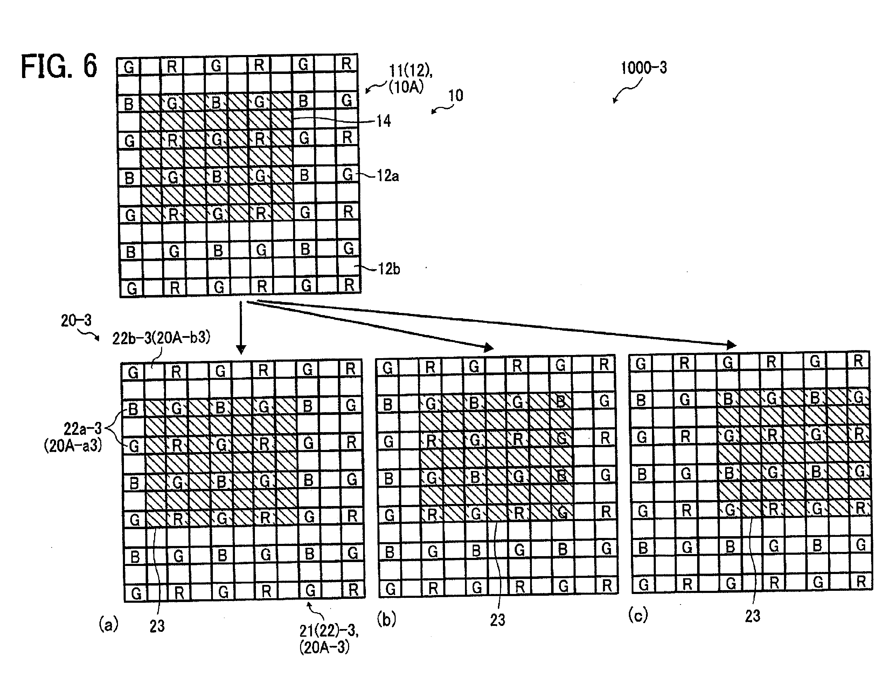

FIG. 6 is a diagram illustrating a configuration of optical filters 12 and 22-3 in a stereo camera system 1000-3 according to a third embodiment. When the color image is required for both the reference camera unit 10 and the comparison camera unit 20-3, by mounting the optical filter 12 shown in FIG. 1B to both reference camera unit 10 and comparison camera unit 20, the color image can be acquired from the both cameras. That is, an optical filter 22-3 of a comparison camera unit 20-3 is constituted by a complex filter, which composes clear area 22b-3 interposed among RGB pixel areas (color images) 22a-3.

The block matching is performed for a parallax 0 position, a parallax 1 position, and a parallax 2 position, which can acquire the parallax information.

It is to be noted that, if the color image is acquired by the both camera units 10 and 20-3, when the image sensor is configured as the complex camera 20-3 shown in FIG. 6, because the multiple clear filter pixels 12b and 22b-3 are arranged in lines and the lines of the multiple clear filter pixels 12b and 22b-3 are arranged among the multiple isolated color filter pixels 12a and 22a-3 so that lines of the multiple first pixels 10A-b and 20A-b3 and the multiple isolated second pixels 10A-a and 20A-a3 alternate in a vertical direction and a horizontal direction in the complex images 10A and 20A-3, even by setting the large block size as is the parallax calculation can be executed sufficiently effectively.

Furthermore, with this improvement of the characteristics, the entire process can be sped up. In the above-described embodiment, although the stereo camera system includes two camera lenses, similar configuration and fundamental basis can be applied; for example, the stereo camera system can mount over two range-finding cameras.

<Vehicle>

FIG. 8 is a schematic diagram illustrating a vehicle 40 mounting the present stereo camera system (range-finding device) 1000. An image processing system in the vehicle 40 includes an image pickup unit 41 to acquire the image forward of the vehicle 40 and an image analysis unit 42 that calculates the distance from another vehicle driving in front of the vehicle 40 based on the image acquired in the capturing unit 41. The image pickup unit 41 is positioned near a rearview mirror in the vehicle 40 so that the image pickup unit 41 can capture the forward image containing another vehicle driving in front of the vehicle 40 and calculate a distance to another vehicle from the vehicle 40. The image of the vehicle in front acquired by the image pickup unit 41 is input to and converted into an image signal for output to the image analysis unit 42. The image analysis unit 42 analyses the image signal output from the image pickup unit 41. As for the image pickup unit 41, the stereo camera device 1 of the present embodiment composed of the reference camera unit 10 and the comparison camera unit 20 can be used. As a part of function of the image analysis unit 42, the parallax calculator 31 and the CPU 33 can be applied.

A vehicle drive control unit 48 can control steering and brake of the vehicle 40 based on the distance from the vehicle in the front calculated by the image analysis unit 42.

**Claims**

1.   A multi-lens camera system (1000, 100-3) comprising:

a first camera unit (20, 20-3) including:

an optical filter (22, 22-3) having first filter parts (22b, 22b-3) having a first set of optical characteristics, wherein the first filter parts (22b, 22b-3) allow light to pass through as luminance information;
a first image sensor (21, 21-3) configured to acquire, based on only luminance information acquired by the first filter parts (22b, 22b-3), a first image (20A, 20A-3) having first pixels (20A-b, 20A-3b) corresponding to the first filter parts (22b, 22b-3);
a first lens (23) configured to concentrate light on the first image sensor (21, 21-3); and
a second camera unit (10) including:

an optical filter (12) having first filter pixel parts (12b) and second filter pixel parts (12a), each of the second filter pixel parts (12a) having a second set of optical characteristics wherein the second filter pixel parts (12a) allow light to pass through at a specific wavelength as color information; and
a second image sensor (11) configured to acquire, based on only luminance information acquired by the first filter pixel parts (12b) and based on optical information, corresponding to the set of optical characteristics acquired by the second filter pixel parts (12a), a second image (10A) having the first pixels (10A-b) corresponding to the multiple first filter pixel parts (12b) and having the second pixels (10A-a) corresponding to the second filter pixel parts (12a);

a second lens (13) configured to concentrate light on the second image sensor (11); and
an image processor (30), operably connected to the first camera unit (20) and the second camera unit (10), and configured to:

perform first image processing on the first pixels (10A-b, 20A-b, 20A-3b) of the first (21, 21-3) and second (11) image sensor depending on the luminance information by parallax computing based on the first pixels (20 A-b, 20 A-3b) corresponding to the first filter parts (22b, 22b-3); and
perform second image processing on the second pixels (10A-a, 20A-a3) depending on the set of optical characteristics by object recognition.

2. The multi-lens camera system according to claim 1, wherein the optical filter (22, 22-3) of the first camera unit (20, 20-3) is a clear filter.

3. The multi-lens camera system according to claim 1, wherein the optical filter (22, 22-3) of the first camera unit (20, 20-3) is an ND filter.

4. The multi-lens camera system (1000) according to any one of claims 1 to 3, wherein the image processor (30) calculates parallax between the images (20A, 10A) in the first camera unit (20) and the second camera unit (10), depending on luminance information contained in the multiple first pixels (20A-b, 10A-b) in the first image (20A) and the second image (10A).

5. The multi-lens camera system (1000) according to any one of claims 1 to 4, wherein the positions of the multiple first pixels (12b) in the second image (10A) for which the parallax is calculated is dynamically changed depending on the position of the multiple second pixels (12a) in the second image (10A) in the second camera unit (10).

6. The multi-lens camera system (1000) according to any one of claims 1 to 5, wherein image information contained in the multiple second pixels (12a) in the second image (10A) is color information.

7. The multi-lens camera system (1000) according to any one of claims 1 to 6, wherein
the multiple first filter pixels (12b) of the optical filter (12) are arranged in lines and the lines of the multiple first filter pixels (12b) are arranged among the multiple isolated second filter pixels (12a) so that lines of the multiple first pixels (10A-b) and the multiple isolated second pixels (10A-a) alternate in a vertical direction and a horizontal direction in the second image (10A)

8. The multi-lens camera system (1000-1H, 1000-1V) according to any one of claims 2 to 6, wherein the first filter pixels (10A-bh, 10A-bv) and the second filter pixels (10A-ah, 10A-av) are arranged in alternating bands.

9. The multi-lens camera system (1000-2) according to any one of claims 2 to 6, wherein the first filter pixels (10A-b2) and the second filter pixels (10A-a2) are arranged in a check-board pattern.

10. The multi-lens camera system (1000-3) according to claim 1, comprising a further optical filter (22, 22-3) having first filter parts (22b, 22b-3) having the first set of optical characteristics, wherein the further optical filter (22-3), through which the first image (20A-3) is formed on the first image sensor (21-3), comprises an optical filter (12, 22-3), wherein each of the optical filters (12, 22-3) has multiple first filter pixels (12b, 22b-3) having the first set of optical characteristics, and multiple isolated second filter pixels (12b, 22b-3) having the second set of optical characteristics different from the first set of optical characteristics, wherein
the multiple first filter pixels (12b, 22b-3) are arranged in lines and the lines of the multiple first filter pixels (12b, 22b-3) are arranged among the multiple isolated second pixels (12a, 22a-3) so that lines of the multiple first pixels (10A-b, 20A-b3) and the multiple isolated second pixels (10A-a, 10A-a3) alternate in a vertical direction and a horizontal direction in the second image (10A, 20A-3).

**Patentansprüche**

1. Mehrlinsen-Kamerasystem (1000, 1000-3), das Folgendes umfasst:

eine erste Kameraeinheit (20, 20-3), die Folgendes enthält:

einen optischen Filter (22, 22-3), der erste Filterteile (22b, 22b-3) aufweist, die einen ersten Satz von optischen Eigenschaften aufweisen, wobei die ersten Filterteile (22b, 22b-3) Licht als Leuchtdichteinformation durchlassen;
einen ersten Bildsensor (21, 21-3), der konfiguriert ist, ausschließlich basierend auf Leuchtdichteinformationen, die von den ersten Filterteilen (22b, 22b-3) aufgenommen werden, ein erstes Bild (20A, 20A-3) aufzunehmen, das erste Pixel (20A-b, 20A-3b), die den ersten Filterteilen (22b, 22b-3) entsprechen, aufweist;
eine erste Linse (23), die konfiguriert ist, Licht auf den ersten Bildsensor (21, 21-3) zu konzentrieren; und
eine zweite Kameraeinheit (10), die Folgendes enthält:

einen optischen Filter (12), der erste Filterpixelteile (12b) und zweite Filterpixelteile (12a) aufweist, wobei jedes der zweiten Filterpixelteile (12a) einen zweiten Satz von optischen Eigenschaften aufweist, wobei die zweiten Filterpixelteile (12a) das Licht bei einer bestimmten Wellenlänge als Farbinformation durchlassen; und
einen zweiten Bildsensor (11), der konfiguriert ist, ausschließlich basierend auf Leuchtdichteinformationen, die von den ersten Filterpixelteilen (12b) aufgenommen werden, und basierend auf optischen Informationen, die dem Satz von optischen Eigenschaften entsprechen, die von den zweiten Filterpixelteilen (12a) aufgenommen werden, ein zweites Bild (10A) aufzunehmen, das die ersten Pixel (10A-b) aufweist, die den mehreren ersten Filterpixelteilen (12b) entsprechen, und die zweiten Pixel (10A-a) aufweist, die den zweiten Filterpixelteilen (12a) entsprechen;

eine zweite Linse (13), die konfiguriert ist, Licht auf den zweiten Bildsensor (11) zu konzentrieren; und
einen Bildprozessor (30), der betriebstechnisch mit der ersten Kameraeinheit (20) und der zweiten Kameraeinheit (10) verbunden ist und konfiguriert ist,
durch Parallaxenberechnung basierend auf den ersten Pixeln (20A-b, 20A-3b), die den ersten Filterteilen (22b, 22b-3) entsprechen, in Abhängigkeit von der Leuchtdichteinformation eine erste Bildverarbeitung an den ersten Pixeln (10A-b, 20A-b, 20A-3b) des ersten (21, 21-3) und des zweiten (11) Bildsensors durchzuführen; und
in Abhängigkeit von dem Satz optischer Eigenschaften durch Objekterkennung eine zweite Bildverarbeitung an den zweiten Pixeln (10A-a, 20A-a3) durchzuführen.

2. Mehrlinsen-Kamerasystem nach Anspruch 1, wobei der optische Filter (22, 22-3) der ersten Kameraeinheit (20, 20-3) einem Klarfilter entspricht.

3. Mehrlinsen-Kamerasystem nach Anspruch 1, wobei der optische Filter (22, 22-3) der ersten Kameraeinheit (20, 20-3) einem ND-Filter entspricht.

4. Mehrlinsen-Kamerasystem (1000) nach einem der Ansprüche 1 bis 3, wobei der Bildprozessor (30) Parallaxen zwischen den Bildern (20A, 10A) in der ersten Kameraeinheit (20) und der zweiten Kameraeinheit (10) berechnet, in Abhängigkeit von den Leuchtdichteinformationen, die in den mehreren ersten Pixeln (20A-b, 10A-b) in dem ersten Bild (20A) und dem zweiten Bild (10A) enthalten sind.

5. Mehrlinsen-Kamerasystem (1000) nach einem der Ansprüche 1 bis 4, wobei die Positionen der mehreren ersten Pixel (12b) in dem zweiten Bild (10A), für das die Parallaxe berechnet wird, in Abhängigkeit von der Position der mehreren zweiten Pixel (12a) in dem zweiten Bild (10A) in der zweiten Kameraeinheit (10) dynamisch verändert werden.

6. Mehrlinsen-Kamerasystem (1000) nach einem der Ansprüche 1 bis 5, wobei die Bildinformationen, die in den mehreren zweiten Pixeln (12a) in dem zweiten Bild (10A) enthalten sind, Farbinformationen entsprechen.

7. Mehrlinsen-Kamerasystem (1000) nach einem der Ansprüche 1 bis 6, wobei die ersten Filterpixel (12b) der optischen Filter (12) in Zeilen angeordnet sind und die Zeilen der ersten Filterpixel (12b) der optischen Filter (12) zwischen den mehreren isolierten zweiten Filterpixeln (12a) derart angeordnet sind, dass sich Zeilen der mehreren ersten Pixel (10A-b) und der mehreren isolierten zweiten Pixel (10A-a) in dem zweiten Bild (10A) in einer vertikalen Richtung und einer horizontalen Richtung abwechseln.

8. Mehrlinsen-Kamerasystem (1000-1H, 1000-1V) nach einem der Ansprüche 2 bis 6, wobei die ersten Filterpixel (10A-bh, 10A-bv) und die zweiten Filterpixel (10A-ah, 10A-av) in abwechselnden Streifen angeordnet sind.

9. Mehrlinsen-Kamerasystem (1000-2) nach einem der Ansprüche 2 bis 6, wobei die ersten Filterpixel (10A-b2) und die zweiten Filterpixel (10A-a2) in einem Schachbrettmuster angeordnet sind.

10. Mehrlinsen-Kamerasystem (1000-3) nach Anspruch 1, das einen weiteren optischen Filter (22, 22-3) umfasst, der erste Filterteile (22b, 22b-3) aufweist, die den ersten Satz von optischen Eigenschaften aufweisen, wobei der weitere optische Filter (22-3), durch den das erste Bild (20A-3) auf dem ersten Bildsensor (21-3) erzeugt wird, einen optischen Filter (12, 22-3) umfasst, wobei
jeder der optischen Filter (12, 22-3) mehrere erste Filterpixel (12b, 22b-3), die den ersten Satz von optischen Eigenschaften aufweisen, und mehrere isolierte zweite Filterpixel (12b, 22b-3) aufweist, die den zweiten Satz von optischen Eigenschaften aufweisen, die sich von dem ersten Satz von optischen Eigenschaften unterscheiden, wobei die mehreren ersten Filterpixel (12b, 22b-3) in Zeilen angeordnet sind und die Zeilen der mehreren ersten Filterpixel (12b, 22b-3) zwischen den mehreren isolierten zweiten Pixeln (10A-a, 10A-a3) derart angeordnet sind, dass die Zeilen der mehreren ersten Pixel (10A-b, 20A-b3) und der mehreren isolierten zweiten Pixel (10A-a, 10A-a3) in dem zweiten Bild (10A, 20A-3) in einer vertikalen Richtung und einer horizontalen Richtung abwechseln.

## Revendications

1. Système d'appareil photographique à multiples objectifs (1000, 100-3) comprenant :

une première unité d'appareil photographique (20, 20-3) comprenant :

un filtre optique (22, 22-3) comportant des premières parties de filtre (22b, 22b-3) présentant un premier ensemble de caractéristiques optiques, dans lequel les premières parties de filtre (22b, 22b-3) laissent passer la lumière en tant qu'informations de luminance ;
un premier capteur d'image (21, 21-3) configuré pour acquérir, sur la base uniquement des informations de luminance acquises par les premières parties de filtre (22b, 22b-3), une première image (20A, 20A-3) comportant des premiers pixels (20A-b, 20A-3b) correspondant aux premières parties de filtre (22b, 22b-3) ;
un premier objectif (23) configuré pour concentrer la lumière sur le premier capteur d'image (21, 21-3) ; et

une deuxième unité d'appareil photographique (10) comprenant :

un filtre optique (12) comportant des premières parties de pixel de filtre (12b) et des deuxièmes parties de pixel de filtre (12a), chacune des deuxièmes parties de pixel de filtre (12a) présentant un deuxième ensemble de caractéristiques optiques, dans lequel les deuxièmes parties de pixel de filtre (12a) laissent passer la lumière à une longueur d'onde spécifique en tant qu'informations de couleur ; et
un deuxième capteur d'image (11) configuré pour acquérir, sur la base uniquement des informations de luminance acquises par les premières parties de pixel de filtre (12b) et sur la base des informations optiques, correspondant à l'ensemble de caractéristiques optiques acquises par les deuxièmes parties de pixel de filtre (12a), une deuxième image (10A) comportant les premiers pixels (10A-b) correspondant aux multiples premières parties de pixel de filtre (12b) et comportant les deuxièmes pixels (10A-a) correspondant aux deuxièmes parties de pixel de filtre (12a) ;

un deuxième objectif (13) configuré pour concentrer la lumière sur le deuxième capteur d'image (11) ; et
un processeur d'image (30), connecté fonctionnellement à la première unité d'appareil photographique (20) et à la deuxième unité d'appareil photographique (10), et configuré pour

appliquer un premier traitement d'image aux premiers pixels (10A-b, 20A-b, 20A-3b) des premier (21, 21-3) et deuxième (11) capteurs d'image conformément aux informations de luminance par un calcul de parallaxe basé sur les premiers pixels (20A-b, 20A-3b) correspondant aux premières parties de filtre (22b, 22b-3) ; et
appliquer un deuxième traitement d'image aux deuxièmes pixels (10A-a, 20A-a3) conformément à l'ensemble de caractéristiques optiques par reconnaissance d'objet.

2. Système d'appareil photographique à multiples objectifs selon la revendication 1, dans lequel le filtre optique (22, 22-3) de la première unité d'appareil photographique (20, 20-3) est un filtre clair.

**3.** Système d'appareil photographique à multiples objectifs selon la revendication 1, dans lequel le filtre optique (22, 22-3) de la première unité d'appareil photographique (20, 20-3) est un filtre ND.

**4.** Système d'appareil photographique à multiples objectifs (1000) selon l'une quelconque des revendications 1 à 3, dans lequel le processeur d'image (30) calcule la parallaxe entre les images (20A, 10A) dans la première unité d'appareil photographique (20) et la deuxième unité d'appareil photographique (10), conformément aux informations de luminance contenues dans les multiples premiers pixels (20A-b, 10A-b) dans la première image (20A) et la deuxième image (10A).

**5.** Système d'appareil photographique à multiples objectifs (1000) selon l'une quelconque des revendications 1 à 4, dans lequel les positions des multiples premiers pixels (12b) dans la deuxième image (10A) pour laquelle la parallaxe est calculée sont changées dynamiquement en fonction de la position des multiples deuxièmes pixels (12a) dans la deuxième image (10A) dans la deuxième unité d'appareil photographique (10).

**6.** Système d'appareil photographique à multiples objectifs (1000) selon l'une quelconque des revendications 1 à 5, dans lequel les informations d'image contenues dans les multiples deuxièmes pixels (12a) dans la deuxième image (10A) sont des informations de couleur.

**7.** Système d'appareil photographique à multiples objectifs (1000) selon l'une quelconque des revendications 1 à 6, dans lequel
les multiples premiers pixels de filtre (12b) du filtre optique (12) sont agencés en lignes et les lignes des multiples premiers pixels de filtre (12b) sont agencées parmi les multiples deuxièmes pixels de filtre isolés (12a) de sorte que les lignes des multiples premiers pixels (10A-b) et des multiples deuxièmes pixels isolés (10A-a) alternent dans une direction verticale et une direction horizontale dans la deuxième image (10A).

**8.** Système d'appareil photographique à multiples objectifs (1000-1H, 1000-1V) selon l'une quelconque des revendications 2 à 6, dans lequel les premiers pixels de filtre (10A-bh, 10A-bv) et les deuxièmes pixels de filtre (10A-ah, 10A-av) sont agencés en bandes alternées.

**9.** Système d'appareil photographique à multiples objectifs (1000-2) selon l'une quelconque des revendications 2 à 6, dans lequel les premiers pixels de filtre (10A-b2) et les deuxièmes pixels de filtre (10A-a2) sont agencés en un motif de damier.

**10.** Système d'appareil photographique à multiples objectifs (1000-3) selon la revendication 1, comprenant un filtre optique (22, 22-3) supplémentaire comportant des premières parties de filtre (22b, 22b-3) présentant le premier ensemble de caractéristiques optiques, dans lequel le filtre optique (22-3) supplémentaire, à travers lequel la première image (20A-3) est formée sur le premier capteur d'image (21-3), comprend un filtre optique (12, 22-3), dans lequel
chacun des filtres optiques (12, 22-3) comporte de multiples premiers pixels de filtre (12b, 22b-3) présentant le premier ensemble de caractéristiques optiques, et de multiples deuxièmes pixels de filtre isolés (12b, 22b-3) présentant le deuxième ensemble de caractéristiques optiques différent du premier ensemble de caractéristiques optiques, dans lequel
les multiples premiers pixels de filtre (12b, 22b-3) sont agencés en lignes et les lignes des multiples premiers pixels de filtre (12b, 22b-3) sont agencées parmi les multiples deuxièmes pixels isolés (12a, 22a-3) de sorte que les lignes des multiples premiers pixels (10A-b, 20A-b3) et des multiples deuxièmes pixels isolés (10A-a, 10A-a3) alternent dans une direction verticale et une direction horizontale dans la deuxième image (10A, 20A-3).

# FIG. 1A

1000

10
12
1
30
13 11
IMAGE
PROCESSOR
23 21
22
20

# FIG. 1B

EP 2 642 759 B1

# FIG. 2

IMAGE PROCESSOR 30

REFERENCE IMAGE 10A(10A-a, 10A-b)

COMPARISON IMAGE 20A(20A-b)

PARALLAX CALCULATOR 31

PARALLAX INFORMATION

RAM (FRAME BUFFER) 32

CPU 33

RECOGNITION RESULTS

RAM 34

10

20

EP 2 642 759 B1

# FIG. 3

# FIG. 4A

# FIG. 4B

# FIG. 4C

# FIG. 4D

# FIG. 5A

# FIG. 5B

# FIG. 5C

FIG. 6

# FIG. 7

# FIG. 8
## PRIOR ART

EP 2 642 759 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005346393 A
- US 6373523 B1
- US 20080199069 A1
- WO 2012102941 A1
- US 20070177014 A1